# EUROPEAN PATENT APPLICATION

(11) **EP 3 480 759 A1**
(43) Date of publication of application: **08.05.2019**
(21) Application number: 18204429.7
(22) Date of filing: 05.11.2018
(51) Int. Cl.: G06Q 20/20, G07G 3/00, G07G 1/00

(54) **COMMODITY-DATA PROCESSING APPARATUS, COMMODITY-DATA PROCESSING SYSTEM, AND COMMODITY-DATA PROCESSING PROGRAM**

(30) Priority: 06.11.2017 JP 2017213637
(71) Applicant: Toshiba Tec Kabushiki Kaisha, Shinagawa-ku Tokyo 141-8562 (JP)
(72) Inventor: NAITO, Hidehiro, Shinagawa-ku,, Tokyo 141-8562 (JP)
(74) Representative: Fédit-Loriot

(57) **Abstract**

A commodity-data processing apparatus according to an embodiment includes a first acquiring unit configured to acquire commodity identification information for identifying a commodity, a second acquiring unit configured to acquire an image or a moving image including a container in its field of view in which a user puts the commodity, and an output unit. If the commodity identification information is acquired by the first acquiring unit, the output unit inputs the commodity to commodity acquisition information indicating a list of commodities for checkout. If a commodity not input to the commodity acquisition information is put in the container, the output unit outputs, on the basis of the image or the moving image including the container acquired by the second acquiring unit, information indicating that the commodity not input to the commodity acquisition information is put in the container.

## Description

### FIELD

The present invention relates to the field of an information processing technology in general, and embodiments described herein relate in particular to a commodity data processing device, a commodity-data processing system, and a commodity-data processing program.

### BACKGROUND

A commodity-data processing apparatus to which information concerning commodities to be purchased is input has been put to practical use in a store, such as a retail store. For example, the commodity-data processing apparatus may scan products and allow for checkout.

A user (e.g., a shopper) can input information concerning commodities to be purchased to a commodity-data processing apparatus by operation of the user himself or herself. However, during a user's input of commodities in the commodity-data processing apparatus (e.g., scanning a barcode), a user might put an unregistered commodity in a basket for settlement, although the user has yet input the information concerning the commodity to the system for payment. As a result, the unregistered commodity could be taken out from the store without payment. An example of such commodity-data processing apparatus may be found in Patent Application Pub. No. JP-A-2005-122420.

### SUMMARY OF INVENTION

To solve such problem, there is provided a commodity-data processing apparatus comprising:
a first acquiring unit configured to acquire commodity identification information for identifying a commodity;
a second acquiring unit configured to acquire an image or a moving image including a container in a field of view of the image or moving image, the container for receiving the commodity; and
an output unit configured to, in response to the first acquiring unit having acquired the commodity identification information, input the commodity to a commodity acquisition information indicating a list of commodities to be purchased by the user and, in response to the first acquiring unit not having acquired the commodity identification to input to the commodity acquisition information and the second acquiring unit having determined the commodity has been placed in the container, output, on the basis of the image or the moving image including the container acquired by the second acquiring unit, information indicating that the commodity not input to the commodity acquisition information for checkout payment has been placed in the container.

Preferably, upon a determination that the commodity not input to the commodity acquisition information is put in the container, the output unit releases, until a predetermined time having elapsed after the commodity identification information is acquired, a monitoring state in which the output unit outputs a warning indicating that the commodity not input to the commodity acquisition information has been placed in the container.

Preferably still, the output unit comprises a touch panel having a display and a touch sensor.

Preferably yet, the first acquiring unit comprises a scanner.

Suitably, the second acquiring unit is a camera.

Suitably still, the commodity-data processing apparatus further comprises a communication interface operable to communicate with a store server and a portable terminal.

Suitably yet, the commodity-data processing apparatus further comprises a control unit having a memory for storing the commodity acquisition information and a processor for processing the image or the moving image to determine whether an unregistered commodity has been placed in the container.

The present invention further relates to a commodity-data processing system comprising:
a commodity-data processing apparatus operated by a user of a store; and
a server apparatus, wherein
the commodity-data processing apparatus includes:
   a first acquiring unit configured to acquire commodity identification information for identifying a commodity;
   a second acquiring unit configured to acquire an image or a moving image including a container in a field of view of the image or the moving image in which a user puts the commodity; and
   a first output unit configured to, if the commodity identification information is acquired by the first acquiring unit, input the commodity to commodity acquisition information indicating a list of commodities to be purchased by the user and, if a commodity not input to the commodity acquisition information is put in the container, output to the server apparatus, on the basis of the image or the moving image including the container acquired by the second acquiring unit, information indicating that the commodity not input to the commodity acquisition information is put in the container, and
the server apparatus includes a second output unit configured to, if receiving, from the commodity-data processing apparatus, the information indicating that the commodity not input to the commodity acquisition information is put in the container, output, to a portable terminal carried by a store clerk of the store, a screen for confirmation for urging the store clerk of the store to confirm the commodity.

Preferably, the first output unit adds, to the information indicating that the commodity not input to the commodity acquisition information is put in the container, an image or a moving image of the container at a time when the commodity not input to the commodity acquisition information is put in the container and outputs the image or the moving image to the server apparatus, and
the second output unit causes the portable terminal to display, on the screen for confirmation, the image or the moving image of the container added to the information indicating that the commodity not input to the commodity acquisition information is put in the container.

Preferably still, the second output unit estimates a present position of the commodity-data processing apparatus that transmits the information indicating that the commodity not input to the commodity acquisition information is put in the container and causes the portable terminal to display, on the screen for confirmation, a map of the store and the present position of the commodity-data processing apparatus.

The present invention further concerns a commodity-data processing method executed in an information processing device, the commodity-data processing method comprising:
acquiring commodity identification information of a commodity;
acquiring an image or a moving image including a container in a field of view of the image or the moving image, the container receiving the commodity placed by a user; and
upon a determination that the commodity identification information is acquired, inputting the commodity to commodity acquisition information indicating a list of commodities for checkout and payment, and
based on the acquired image or the moving image, upon a determination that a commodity not registered in the commodity acquisition information has been placed in the container, outputting information indicating that the commodity not input to the commodity acquisition information has been placed in the container.

Preferably, in the method, acquiring commodity identification information comprises scanning a code of a commodity passing by a scanner.

Preferably still, the method further comprises recognizing a user.

Preferably yet, the method further comprises upon a determination that a commodity not registered in the commodity acquisition information has not been placed in the container, executing an accounting procedure.

Suitably, the method further comprises transmitting the commodity acquisition information to a store server.

Suitably still, in the method, inputting the commodity to commodity acquisition information indicating a list of commodities for checkout and payment further comprises granting a permission to place the commodity in the container.

Suitably yet, in the method, granting the permission to place the commodity in the container is limited by a predetermined time period.

Typically, the method further comprises revoking the permission to place the commodity in the container when the predetermined time period has elapsed.

Typically still, in the method, outputting information indicating that the commodity not registered in the commodity acquisition information has been placed in the container comprises displaying a warning message on a screen.

Typically yet, the method further comprises transmitting a warning notice to a store server.

The present invention further relates to a non-transitory computer readable medium storing a program causing a computer to execute the method described above.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram for explaining an example of the configuration of a commodity-data processing system according to an embodiment;
FIG. 2 is a diagram for explaining an example of the configuration of a commodity-data processing apparatus according to the embodiment;
FIG. 3 is a diagram for explaining an example of the configuration of a store server according to the embodiment;
FIG. 4 is a diagram for explaining an example of the configuration of a portable terminal according to the embodiment;
FIG. 5 is a diagram for explaining an example of the operation of the commodity-data processing apparatus;

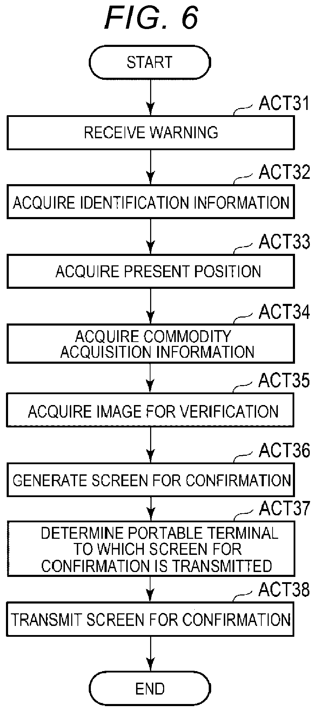

FIG. 6 is a diagram for explaining an example of the operation of the store server; and
FIG. 7 is a diagram for explaining an example of a screen displayed on the portable terminal.

### DETAILED DESCRIPTION

This disclosure provides a commodity-data processing apparatus, a commodity-data processing system, and a commodity-data processing program that can detect a commodity yet registered in the commodity-data database or record.

In general, according to one embodiment, a commodity-data processing apparatus includes: a first acquiring unit configured to acquire commodity identification information for identifying a commodity; a second acquiring unit configured to acquire an image or a moving image including a container in its field of view in which a user puts the commodity; and an output unit. If the commodity identification information is acquired by the first acquiring unit, the output unit inputs the commodity to commodity acquisition information indicating a list of commodities ready for checkout and payment. If a commodity not registered in the commodity acquisition information database is put in the container, the output unit outputs, based on the image or the moving image including the container acquired by the second acquiring unit, information indicating that the commodity that has not been entered into the commodity acquisition information has been placed in the container.

A commodity-data processing apparatus, a commodity-data processing system, and a commodity-data processing program according to an embodiment are explained below with reference to the drawings.

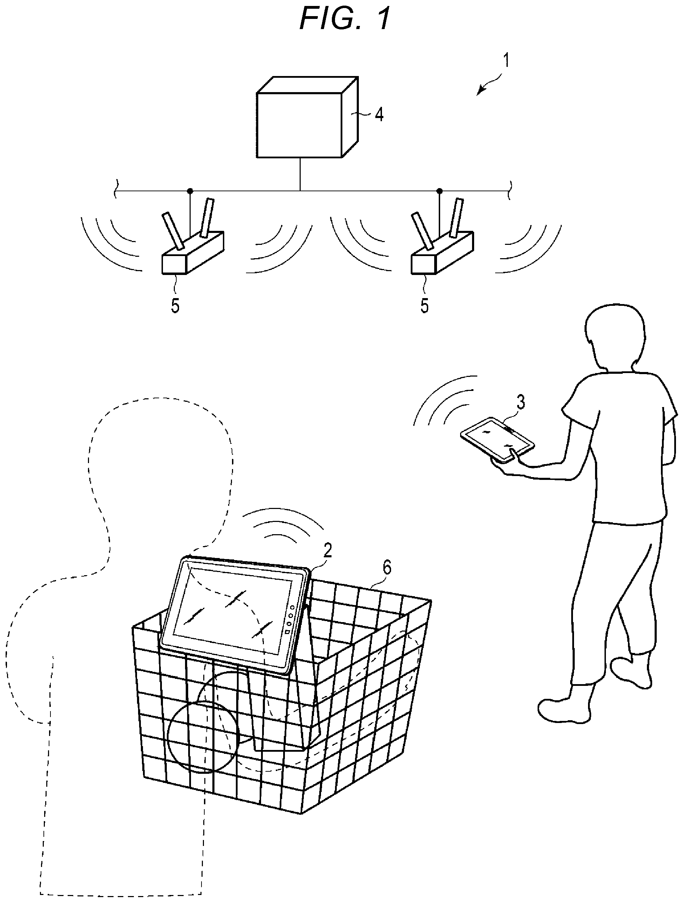

FIG. 1 is an explanatory diagram illustrating a configuration example of a commodity-data processing system 1 according to an embodiment. The commodity-data processing system 1 is a system to which information concerning a commodity, a charge of which a user pays, has been registered in a store such as a retail store and that performs settlement of the charge on the basis of the input information. The commodity-data processing system 1 includes a commodity-data processing apparatus 2, a portable terminal 3, and a store server (a server apparatus) 4. The commodity-data processing system 1 includes access points 5 set in the store and configured to relay wireless communication among the commodity-data processing apparatus 2, the portable terminal 3, and the store server 4. That is, the commodity-data processing apparatus 2, the portable terminal 3, and the store server 4 of the commodity-data processing system 1 are configured to be communicable via the access points 5.

First, the configuration of the commodity-data processing apparatus 2 is explained.

Information for identifying commodities (commodity identification information) has been registered to the commodity-data processing apparatus 2. The commodity-data processing apparatus 2 performs commodity information acquisition processing for generating commodity acquisition information, which is a list of the commodities. The commodity-data processing apparatus 2 is a so-called self-type POS terminal with which, for example, when a user puts commodities in a basket (a container) 6, the user inputs commodity information to the commodity-data processing apparatus 2. Specifically, the commodity-data processing apparatus 2 is a cart POS terminal attachable to the basket 6 or a cart on which the basket 6 is mounted. The commodity-data processing apparatus 2 transmits the commodity acquisition information to the store server 4.

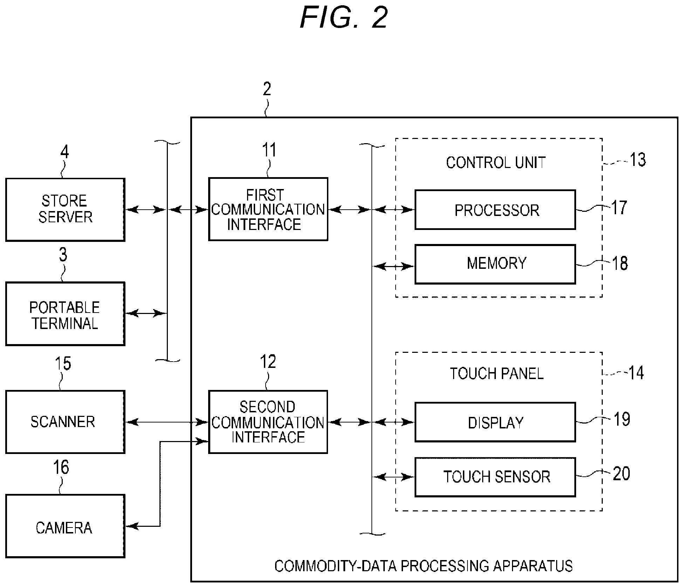

FIG. 2 is a diagram for explaining an example of the configuration of the commodity-data processing apparatus 2. The commodity-data processing apparatus 2 includes a first communication interface 11, a second communication interface 12, a control unit 13, and a touch panel 14.

The first communication interface 11 is an interface for communicating with apparatuses other than the commodity-data processing apparatus 2. The first communication interface 11 includes a circuit for communicating with the portable terminal 3 and the store server 4 via the access points 5 through wireless communication. The first communication interface 11 communicates with the portable terminal 3, the store server 4, and the like on the basis of control by the control unit 13.

The second communication interface 12 is an interface for communicating with apparatuses other than the commodity-data processing apparatus 2. The second communication interface 12 includes a circuit for communicating with a scanner 15 and a camera 16. The second communication interface 12 communicates with the scanner 15, the camera 16, and the like on the basis of the control by the control unit 13. The second communication interface 12 acquires, from the camera 16, an image of the basket 6 in which the user puts commodities and acquires, from the scanner 15, commodity identification information for identifying the commodities. In the acquired image, an opening portion of the basket 6 and the inside of the basket 6 are imaged. It is unnecessary to image the entire basket 6. Although a container described in claims is defined as the basket 6, the container may be a placing section of a cart. The container is a general term of a place where read commodities are placed or stored. The second communication interface 12 may be configured to communicate with the scanner 15 and the camera 16 by wire or may be configured to communicate with the scanner 15 and the camera 16 through wireless communication.

The scanner 15 is a device configured to read commodity identification information for identifying commodities. For example, the scanner 15 reads a code (i.e., a barcode, a two-dimensional code, or another code) given to a commodity by, for example, printing. The scanner 15 decodes the read code and acquires commodity identification information. The scanner 15 transmits the acquired commodity identification information to the commodity-data processing apparatus 2.

The camera 16 includes a lens and an imaging element configured to convert light focused by the lens into an image. An angle of view of the lens of the camera 16 is adjusted such that the inside of the basket 6, in which the user puts commodities, can be photographed. The camera 16 transmits an image (a basket image) generated by imaging the inside of the basket 6 to the commodity-data processing apparatus 2. The camera 16 may be configured to periodically acquire basket images and sequentially transmit the basket images to the commodity-data processing apparatus 2. The camera 16 may be configured to acquire a moving image in which the basket 6 is photographed and transmit the moving image to the commodity-data processing apparatus 2.

That is, the second communication interface 12 functions as a first acquiring unit configured to acquire commodity identification information for identifying commodities and a second acquiring unit configured to acquire an image or a moving image including the basket 6 (the container) in which the user puts the commodities.

The control unit 13 is a processing unit configured to execute various kinds of processing. The control unit 13 includes a processor 17 and a memory 18.

The processor 17 is an arithmetic element configured to execute arithmetic processing. The processor 17 is configured as, for example, a CPU. The processor 17 performs various kinds of processing on the basis of computer programs stored in the memory 18. The memory 18 is a storage device configured to store computer programs and data. The memory 18 includes any one or more of, for example, a ROM, which is a read-only nonvolatile memory, a RAM that temporarily stores data, and a storage that stores data. The touch panel 14 is a device configured to perform display of a screen and generation of an operation signal based on operation. The touch panel 14 includes a display 19 and a touch sensor 20.

The display 19 displays a screen on the basis of data for display (screen data) supplied from the control unit 13 or a not-illustrated graphic controller.

The touch sensor 20 generates an operation signal indicating a position touched by an operator, who operates the commodity-data processing apparatus 2, on the screen displayed on the display 19.

The configuration of the portable terminal 3 is explained.

The portable terminal 3 is a terminal carried by a store clerk of the store. The portable terminal 3 notifies various kinds of information to the store clerk on the basis of information supplied from the store server 4. The portable terminal 3 supplies various kinds of information to the store server 4 on the basis of operation.

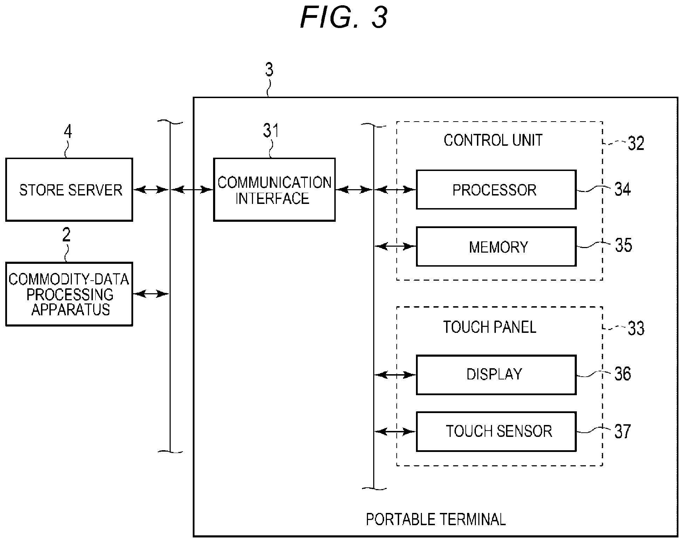

FIG. 3 is a diagram for explaining an example of the configuration of the portable terminal 3. The portable terminal 3 includes a communication interface 31, a control unit 32, and a touch panel 33.

The communication interface 31 is an interface for communicating with apparatuses other than the portable terminal 3. The communication interface 31 includes a circuit for communicating with the commodity-data processing apparatus 2 and the store server 4 via the access points 5 through wireless communication. The communication interface 31 communicates with the commodity-data processing apparatus 2, the store server 4, and the like on the basis of control by the control unit 32.

The control unit 32 is a processing unit configured to execute various kinds of processing. The control unit 32 includes a processor 34 and a memory 35.

The processor 34 is an arithmetic element configured to execute arithmetic processing. The processor 34 is configured as, for example, a CPU. The processor 34 performs various kinds of processing on the basis of computer programs stored in the memory 35. The memory 35 is a storage device configured to store computer programs and data. The memory 35 includes any one or more of, for example, a ROM, which is a read-only nonvolatile memory, a RAM that temporarily stores data, and a storage that stores data. The touch panel 33 is a device configured to perform display of a screen and generation of an operation signal based on operation. The touch panel 33 includes a display 36 and a touch sensor 37.

The display 36 displays a screen on the basis of data for display (screen data) supplied from the control unit 32 or a not-illustrated graphic controller.

The touch sensor 37 generates an operation signal indicating a position touched by the operator, who operates the commodity-data processing apparatus 2, on the screen displayed on the display 36.

The configuration of the store server 4 is explained.

The store server 4 is an apparatus provided in each store and configured to perform accounting processing on the basis of commodity acquisition information transmitted from the commodity-data processing apparatus 2. The store server 4 performs information provision processing for supplying various kinds of information to the portable terminal 3 to thereby provide the various kinds of information to the store clerk.

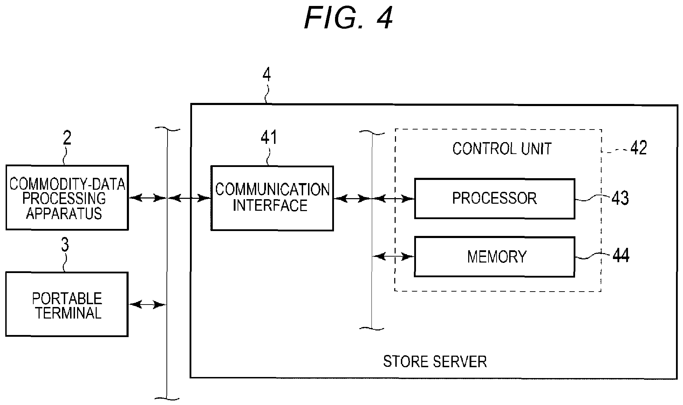

FIG. 4 is a diagram for explaining an example of the configuration of the store server 4. The store server 4 includes a communication interface 41 and a control unit 42.

The communication interface 41 is an interface for communicating with apparatuses other than the store server 4. The communication interface 41 includes a circuit for communicating with the commodity-data processing apparatus 2 and the portable terminal 3 via the access points 5 through wireless communication. The communication interface 41 may be connected to the access points 5 by wired communication. The communication interface 41 communicates with the commodity-data processing apparatus 2, the portable terminal 3, and the like on the basis of control by the control unit 42.

The control unit 42 is a processing unit configured to execute various kinds of processing. The control unit 42 includes a processor 43 and a memory 44.

The processor 43 is an arithmetic element configured to execute arithmetic processing. The processor 43 is configured as, for example, a CPU. The processor 43 performs various kinds of processing on the basis of computer programs stored in the memory 44. The memory 44 is a storage device configured to store computer programs and data. The memory 44 includes any one or more of, for example, a ROM, which is a read-only nonvolatile memory, a RAM that temporarily stores data, and a storage that stores data. The memory 44 of the store server 4 includes a commodity database in which commodity identification information and information concerning commodities (commodity information) are associated. The commodity information is, for example, information indicating a name, a price, a category, and the like of each commodity.

The memory 44 of the store server 4 includes a user database in which information for identifying users (user identification information) and information for settlement are associated. The information for settlement is information used for, in accounting processing, settlement of a charge (a settlement amount) of a commodity for which settlement is necessary. The information for settlement includes any one or more of value information, credit information, and account information.

The value information is information indicating an amount (a remaining amount) usable for settlement. The value information is charged (added) by the user performing payment by cash, credit, or the like. If settlement is performed, a settlement amount is subtracted from the remaining amount of the value information. If the remaining amount is less than the settlement amount, a result of the settlement is NG. A point substitutable for the remaining amount of the value information may be further associated with an account as the information for settlement.

The credit information is information concerning a credit card. If settlement is performed, billing information for billing a credit card company a settlement amount is transmitted to a server of the credit card company on the basis of the credit information. In response to the billing information, a response of approval or disapproval is returned from the server of the credit card company.

The account information is information indicating a bank account usable for settlement. If settlement is performed, billing information for withdrawing a settlement amount from the bank account is transmitted to a server of a bank on the basis of the account information. In response to the billing information, a response of approval or disapproval is returned from the server of the bank.

The user database may be configured to further include personal information and notification destination information.

The personal information is information concerning the user corresponding to the user identification information. The personal information is, for example, a name, sex, a date of birth, and an address.

The notification destination information is information indicating a notification destination to which a result of accounting processing and various kinds of information are notified. The notification destination information is any one or more of, for example, a mail address, a telephone number, and identification information in an application. A use result of the accounting processing is information including a list of commodities purchased by the user and a settlement amount.

The memory 44 of the store server 4 stores a map in the store in advance.

Commodity information acquisition processing executed in the commodity-data processing apparatus 2 is explained.

The processor 17 executes a computer program stored in the memory 18, whereby the control unit 13 of the commodity-data processing apparatus 2 executes the commodity information acquisition processing. While executing the commodity information acquisition processing, the control unit 13 operates in a monitoring state for periodically acquiring a basket image from the camera 16 and determining on the basis of the acquired basket image whether a commodity is put in the basket 6. When operating in the monitoring state, if detecting that a commodity is put in the basket 6, the control unit 13 causes the display 19 of the touch panel 14 to display a warning screen and outputs a warning. The control unit 13 transmits the warning to, for example, the store server 4.

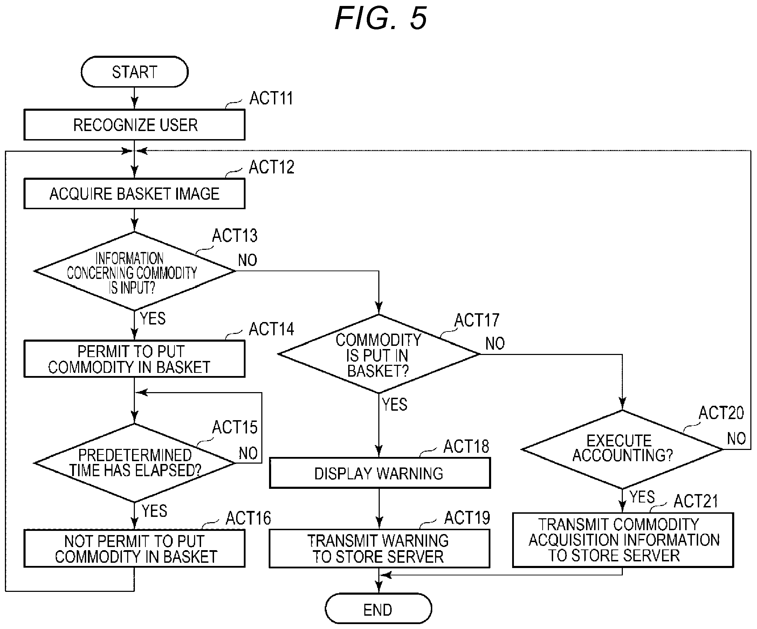

FIG. 5 is an explanatory diagram for explaining the commodity information acquisition processing in the commodity-data processing apparatus 2.

First, the control unit 13 of the commodity-data processing apparatus 2 recognizes a user (ACT 11). For example, the control unit 13 acquires user identification information from the user and transmits the user identification information to the store server 4. The store server 4 refers to the user database, retrieves a user corresponding to the received user identification information, and transmits a retrieval result to the commodity-data processing apparatus 2. Consequently, the control unit 13 of the commodity-data processing apparatus 2 specifies a user who is operating the commodity-data processing apparatus 2.

The user identification information is, for example, information such as an ID and a password that the control unit 13 causes the user to input with the touch panel 14. For example, the user identification information may be information obtained by reading, with the scanner 15 or the camera 16, a code printed on an ID card carried by the user or a code displayed on a portable terminal such as a smartphone. For example, the user identification information may be a face image of the user acquired by the camera 16 or other biological information of the user acquired by another not-illustrated device.

The control unit 13 acquires a basket image from the camera 16 connected to the second communication interface 12 (ACT 12).

The control unit 13 determines whether commodity information has been registered (ACT 13). For example, if acquiring commodity identification information from the scanner 15 connected to the second communication interface 12, the control unit 13 transmits the commodity identification information acquired from the scanner 15 to the store sever 4. The store server 4 refers to the commodity database, retrieves commodity information corresponding to the received commodity information, and transmits the retrieved commodity information to the commodity-data processing apparatus 2. Consequently, the control unit 13 of the commodity-data processing apparatus 2 adds a commodity indicated by the received commodity information to a commodity list of the commodity acquisition information. That is, the control unit 13 recognizes a commodity that the user causes the scanner 15 to read and inputs the commodity to the commodity acquisition information. Further, the control unit 13 may cause, on the basis of the commodity acquisition information, the display 19 of the touch panel 14 to display a list of commodities, a total amount (a settlement amount), and the like.

In determining that commodity information has been registered (YES in ACT 13), the control unit 13 permits the user to put a commodity in the basket 6 (ACT 14). That is, if the user inputs the commodity that the user causes the scanner 15 to read, the control unit 13 releases the monitoring state. For example, the control unit 13 releases the monitoring state by performing control not to detect whether a commodity is put in the basket 6. For example, the control unit 13 may be configured to release the monitoring state by performing control not to perform display of a warning screen, transmission of a warning, and the like even if it is detected that a commodity is put in the basket 6.

The control unit 13 releases the monitoring state and determines whether a predetermined time set in advance has elapsed after the control unit 13 permits the user to put the commodity in the basket 6 (ACT 15). The control unit 13 repeatedly executes the determination in ACT 15 until an elapsed time after the release of the monitoring state reaches the predetermined time.

Upon determining that the elapsed time after the release of the monitoring state has reached the predetermined time (YES in ACT 15), the control unit 13 shifts to the monitoring state again, does not permit the user to input a commodity in the basket 6 (ACT 16), and shifts to the processing in ACT 12.

Upon determining in ACT 13 that commodity information is not input (NO in ACT 13), the control unit 13 determines whether a commodity is put in the basket 6 (ACT 17). For example, the control unit 13 periodically acquires a basket image from the camera 16 and, if the basket image changes, determines that a commodity is put in the basket 6. That is, if acquiring a basket image (a first basket image) from the camera 16, the control unit 13 compares a basket image (a second basket image) acquired from the camera 16 in the past and the first basket image and determines, on the basis of whether there is a change between the basket images, whether a commodity is put in the basket 6. Specifically, the control unit 13 calculates similarity between the first basket image and the second basket image and, if the calculated similarity is smaller than a threshold set in advance, determines that a commodity is put in the basket 6.

If a commodity is put in the basket 6, the commodity advances from the outside of an angle of view of the camera 16 to the inside of the angle of view. Therefore, the control unit 13 may be configured to compare a basket image captured when no commodity is present in the basket 6 and a basket image acquired from the camera 16 to thereby extract a region where the commodity is photographed and, if the region where the commodity is photographed is formed along the edge of the basket image, determine that a commodity has been registered in the basket 6.

The control unit 13 may be configured to acquire a moving image from the camera 16, extract a movement of an object in the acquired moving image, and, if a movement from which it is estimated that a commodity is put in the basket 6 is detected, determine that a commodity is put in the basket 6.

Upon determining that a commodity is put in the basket 6 (YES in ACT 17), the control unit 13 causes the display 19 of the touch panel 14 to display a warning screen (ATC 18). The warning screen includes, for example, indication for urging the user to input the commodity put in the basket 6 to the commodity-data processing apparatus 2. The warning screen may include indication for urging the user to move to, for example, a store clerk, a register, or a counter close to the user.

The control unit 13 transmits a warning to the store server 4 (ACT 19) and ends the processing. The control unit 13 may be configured to keep the warning screen displayed without ending the commodity information acquisition processing after transmitting the warning to the store server 4. The control unit 13 may be configured to transmit the warning to the store server 4 if a predetermined time set in advance elapses after the warning screen is displayed.

The warning is information indicating that a commodity is put in the basket 6 without being registered to the commodity acquisition information. That is, the warning is information indicating that a commodity not input to the commodity acquisition information is put in the container. That is, the control unit 13 acquires the commodity identification information, inputs a commodity to the commodity acquisition information indicating a list of commodities for checkout, and determines on the basis of a basket image whether a commodity not input to the commodity acquisition information is put in the basket 6. Further, the control unit 13 functions as an output unit configured to, upon determining that a commodity not input to the commodity acquisition information is put in the basket 6, output information (a warning) indicating that the commodity not input to the commodity acquisition information is put in the basket 6.

The control unit 13 may add identification information of the commodity-data processing apparatus 2 to the warning. Further, the control unit 13 may add information indicating a present position of the commodity-data processing apparatus 2 to the warning. For example, the control unit 13 may add identification information of the closest access point 5 to the warning as the information indicating the present position of the commodity-data processing apparatus 2. For example, the control unit 13 may add the commodity acquisition information to the warning. For example, the control unit 13 may generate an image for verification and add the generated image for verification to the warning.

The image for verification is basket images acquired from the camera 16 at timings before and after timing when it is detected that a commodity is put in the basket 6 without being registered. For example, the control unit 13 adds a set of the first basket image and the second basket image to the warning as the image for verification. For example, the control unit 13 may be configured to add, to the warning, as the image for verification, a moving image including timing when it is detected that a commodity is put in the basket 6 without being registered.

Upon determining in ACT 17 that a commodity is not put in the basket 6 (NO in ACT 17), the control unit 13 determines whether accounting is performed (ACT 20). For example, if operation for instructing the commodity-data processing apparatus 2 to perform accounting has been registered in the touch panel 14, the control unit 13 determines that accounting is performed. For example, if a command for instructing the commodity-data processing apparatus 2 to perform accounting has been registered via the first communication interface 11, the control unit 13 determines that accounting is performed. For example, if receiving a command periodically transmitted from a not-illustrated gate device provided between a selling area and an entrance of the store, the control unit 13 determines that accounting is performed.

Upon determining that accounting is not performed (NO in ACT 20), the control unit 13 shifts to the processing in ACT 12. Upon determining that accounting is performed (YES in ACT 20), the control unit 13 transmits the commodity acquisition information and the user identification information acquired in ACT 11 to the store server 4 (ACT 21) and ends the processing.

An example of accounting processing executed in the store server 4 is explained.

If acquiring the commodity acquisition information and the user identification information from the commodity-data processing apparatus 2, the control unit 42 of the store server 4 executes accounting processing for performing billing of a settlement amount and a change of a stock of commodities.

If acquiring the user identification information from the commodity-data processing apparatus 2, the control unit 42 refers to the user database and acquires information for settlement associated with the acquired user identification information.

If acquiring the commodity acquisition information from the commodity-data processing apparatus 2, the control unit 42 determines a settlement amount on the basis of the acquired commodity acquisition information. That is, the control unit 42 calculates a settlement amount on the basis of a total of prices of commodities input to the commodity acquisition information.

The control unit 42 performs billing of the settlement amount according to a settlement method indicated by the acquired information for settlement. If the information for settlement is account information, the control unit 42 performs processing for withdrawing the settlement amount from an account. If the information for settlement is credit information, the control unit 42 performs processing for billing a credit card company a charge. If the information for settlement is value information, the control unit 42 performs processing for withdrawing a charge from a remaining amount of the value information.

If a plurality of kinds of information for settlement are registered, the control unit 42 may change a payment method on the basis of operation of the user on the commodity-data processing apparatus 2. In this case, the commodity-data processing apparatus 2 transmits information for designating the payment method on the basis of the operation of the user to the store server 4 together with the commodity acquisition information and the user identification information. The control unit 42 of the store server 4 performs the billing of the settlement amount according to the designated payment method.

An example of information provision processing executed in the store server 4 is explained. Information provision processing executed if the store server 4 receives a warning from the commodity-data processing apparatus 2 is explained.

As explained above, if a commodity is put in the basket 6 while the commodity-data processing apparatus 2 is in the monitoring state, the commodity-data processing apparatus 2 transmits a warning to the store server 4. In the following explanation, it is assumed that identification information of the commodity-data processing apparatus 2, information (position information) indicating a present position of the commodity-data processing apparatus 2, commodity acquisition information, and an image for verification are added to the warning.

The control unit 42 of the store server 4 receives a warning from the commodity-data processing apparatus 2 (ACT 31). If receiving the warning from the commodity-data processing apparatus 2, the processor 43 executes a computer program stored in the memory 44, whereby the control unit 42 of the store server 4 executes information provision processing.

First, the control unit 42 acquires identification information of the commodity-data processing apparatus 2 that has transmitted the warning (ACT 32).

Subsequently, the control unit 42 acquires a present position of the commodity-data processing apparatus 2 that has transmitted the warning (ACT 33). For example, the control unit 42 recognizes position information included in the warning as the present position of the commodity-data processing apparatus 2.

Subsequently, the control unit 42 acquires commodity acquisition information of the commodity-data processing apparatus 2 that has transmitted the warning (ACT 34). Consequently, the control unit 42 recognizes a list of commodities input to the commodity-data processing apparatus 2 at a point in time when the warning is transmitted.

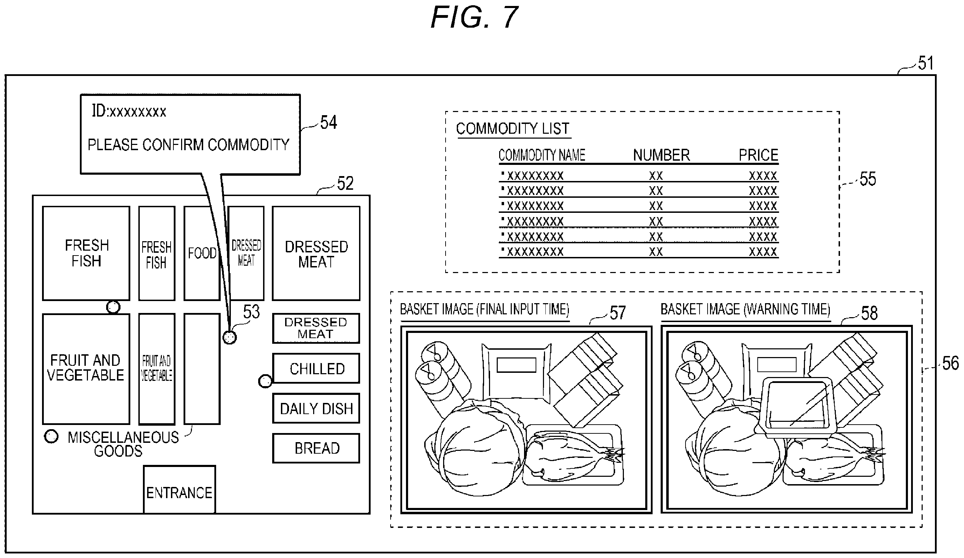

Subsequently, the control unit 42 acquires an image for verification acquired by the commodity-data processing apparatus 2 that has transmitted the warning (ACT 35). For example, the control unit 42 acquires an image for verification added to the warning. Further, the control unit 42 may be configured to acquire, from a not-illustrated camera (e.g., a monitoring camera) set in the store and configured to photograph the vicinity of the present position of the commodity-data processing apparatus 2 recognized in ACT 33, still images or moving images before and after timings when the warning is transmitted. Subsequently, the control unit 42 generates a screen for confirmation that the control unit 42 causes the portable terminal 3 to display (ACT 36). For example, the control unit 42 generates a screen for confirmation 51 illustrated in FIG. 7 using the identification information of the commodity-data processing apparatus 2, the present position of the commodity-data processing apparatus 2, the list of commodities input to the commodity-data processing apparatus 2, and the image for verification.

FIG. 7 is an explanatory diagram for explaining an example of the screen for confirmation 51. The screen for confirmation 51 is a screen for notifying a store clerk that a commodity is put in the basket 6 without being registered and urging the store clerk to confirm the commodity. The screen for confirmation 51 includes map display 52, position display 53, communication display 54, a commodity list 55, and an image for verification 56.

The map display 52 is a map of the store showing shelves, the entrance, and the like. The control unit 42 generates the map display 52 using a map stored in the memory 44. The position display 53 is display indicating the present position of the commodity-data processing apparatus 2 that has transmitted the warning. The control unit 42 causes the portable terminal 3 to displas a marker, an icon, or the like as the position display 53 in in a position on the map display 52 corresponding to the present position of the commodity-data processing apparatus 2 recognized in ACT 33.

The communication display 54 is display showing a message communicated to the store clerk. In the example in FIG. 7, the identification information of the commodity-data processing apparatus 2 and indication for urging the user to confirm commodities in the basket 6 corresponding to the commodity-data processing apparatus 2 are included in the communication display 54. The control unit 13 generates the communication display 54 using the identification information of the commodity-data processing apparatus 2 recognized in ACT 32 and a message set in advance.

The commodity list 55 is display showing a list of commodities input to the commodity-data processing apparatus 2 that has transmitted the warning. The control unit 13 generates the commodity list 55 on the basis of the commodity acquisition information recognized in ACT 34. The control unit 13 causes the display 19 to display a name, a price, a category, and the like of each commodity as the commodity list 55. The image for verification 56 is an image for causing the store clerk to recognize a state in the basket 6 at the time when the commodity-data processing apparatus 2 transmits the warning. The control unit 42 causes the portable terminal 3 to display, as the image for verification 56, for example, a first basket image 57, which is a basket image before the commodity-data processing apparatus 2 transmits the warning, and a second basket image 58, which is a basket image after the commodity-data processing apparatus 2 transmits the warning. The control unit 42 may cause the portable terminal 3 to display, as the image for verification 56, a moving image photographed at timings before and after the commodity-data processing apparatus 2 transmits the warning.

The control unit 42 determines the portable terminal 3 that transmits the screen for confirmation 51 (ACT 37). For example, the control unit 42 sequentially recognizes present positions of the portable terminals 3 present in the store by periodically performing communication with the portable terminal 3 carried by the store clerk. The control unit 42 determines the portable terminal 3 close to the present position of the commodity-data processing apparatus 2 recognized in ACT 33 as the portable terminal 3 to which the screen for confirmation 51 is transmitted. The control unit 42 may be configured to recognize the present positions of the portable terminals 3 according to any method.

The control unit 42 transmits the screen for confirmation 51 to the determined portable terminal 3 (ACT 38) and ends the processing.

If receiving the screen for confirmation 51 from the store server 4, the control unit 32 of the portable terminal 3 causes the display 36 of the touch panel 33 to display the screen for confirmation 51. Consequently, the control unit 32 can cause the store clerk carrying the portable terminal 3 to confirm the screen for confirmation 51. As a result, the store clerk can urge the user to input a commodity to the commodity-data processing apparatus 2.

The control unit 32 may cause the display 36 to display, together with the screen for confirmation 51, a release button for releasing the display of the warning screen of the commodity-data processing apparatus 2. If the release button is selected, the control unit 32 transmits identification information of the commodity-data processing apparatus 2 and a release request to the store server 4. The control unit 42 of the store server 4 transmits a signal for instructing the release of the display of the warning screen to the commodity-data processing apparatus 2 having the received identification information. With this configuration, if the store clerk confirms that a commodity is correctly input, the store clerk can release the display of the warning screen of the commodity-data processing apparatus 2 by selecting the release button.

As explained above, if acquiring the commodity identification information from the scanner 15, the commodity-data processing apparatus 2 inputs a commodity to the commodity acquisition information indicating the list of commodities for checkout. If the commodity has been registered, the commodity-data processing apparatus 2 releases the monitoring state. If the commodity-data processing apparatus 2 is in the monitoring state, the commodity-data processing apparatus 2 determines on the basis of a basket image acquired from the camera 16 whether a commodity is put in the basket 6. Consequently, the commodity-data processing apparatus 2 can permit the user to put the input commodity in the basket 6 and can detect that a commodity not input is put in the basket 6.

If detecting that the user puts a commodity in the basket 6 without inputting the commodity, the commodity-data processing apparatus 2 transmits a warning to the store server 4. If receiving the warning from the commodity-data processing apparatus 2, the store server 4 notifies the portable terminal 3 carried by the store clerk in the store that the user puts the commodity in the basket 6 without inputting the commodity. Consequently, it is possible to prevent a commodity from being taken out from the store without settlement being performed.

The commodity-data processing apparatus 2 transmits, to the store server 4, a basket image at timing when it is detected that the user puts the commodity in the basket 6 without inputting the commodity. The store server 4 causes the portable terminal 3 to display the basket image on the screen for notification notified to the portable terminal 3. Consequently, the store server 4 can cause the store clerk carrying the portable terminal 3 to confirm a state of the basket 6 at a point in time when the warning is transmitted.

The store server 4 estimates a present position of the commodity-data processing apparatus 2 and causes the portable terminal 3 to display the present position of the commodity-data processing apparatus 2 on the screen for confirmation. Consequently, the store server 4 can cause the store clerk carrying the portable terminal 3 to confirm the position of the commodity-data processing apparatus 2 that has transmitted the warning. In the explanation in the embodiment, the commodity-data processing apparatus 2 is the cart POS terminal attachable to the basket 6 or the cart on which the cart 6 is mounted. However, the commodity-data processing apparatus 2 is not limited to this configuration. The commodity-data processing apparatus 2 may have any configuration if the commodity-data processing apparatus 2 includes a memory having stored therein a computer program for a commodity data processing device corresponding to the commodity-data processing system 1, a processor configured to execute the computer program, a communication interface configured to communicate with the store server 4 via the access points 5, and a unit configured to acquire an image. That is, the commodity-data processing apparatus 2 may be a portable terminal such as a smartphone carried by the user.

The camera 16 may be a monitoring camera provided in the store rather than the camera connected to the commodity-data processing apparatus 2. The scanner 15 and the camera 16 may be provided in the commodity-data processing apparatus 2.

In the above explanation, the commodity-data processing apparatus 2 is configured to determine on the basis of a basket image acquired from the camera 16 whether a commodity is put in the basket 6. However, the commodity-data processing apparatus 2 is not limited to this configuration. The commodity-data processing apparatus 2 may sequentially measure the weight of the basket 6 and determine on the basis of a result of the measurement whether a commodity is put in the basket 6. The commodity-data processing apparatus 2 may be configured to determine, according to any other method, whether a commodity is put in the basket 6.

In the above explanation, the commodity-data processing apparatus 2 is configured to, if receiving the commodity identification information, acquire the commodity information by transmitting the commodity identification information to the store server 4. However, the commodity-data processing apparatus 2 is not limited to this configuration. The commodity-data processing apparatus 2 may be configured to store, in the memory 18, in advance, a commodity database in which the commodity identification information and the commodity information are associated. In this case, the commodity-data processing apparatus 2 can acquire the commodity information corresponding to the commodity identification information by referring to the commodity database. For example, if identifying the user, the commodity-data processing apparatus 2 receives the commodity database from the store server 4 and stores the commodity database in the memory 18.

In the above explanation, the commodity-data processing apparatus 2 is configured to store the commodity acquisition information in the memory 18. However, the commodity-data processing apparatus 2 is not limited to this configuration. The commodity-data processing apparatus 2 may be configured to, if receiving the commodity identification information, transmit the commodity identification information to the store server 4. The store server 4 may generate the commodity acquisition information on the basis of the commodity identification information received from the commodity-data processing apparatus 2 and store the commodity acquisition information in the memory 44.

In the above explanation, the control unit 13 of the commodity-data processing apparatus 2 is configured to, if detecting that a commodity not input to the commodity acquisition information is put in the basket 6, transmit a warning to the store server 4. However, the control unit 13 is not limited to this configuration. The control unit 13 may have any configuration if the control unit 13 outputs, to other apparatuses, information indicating that the commodity not input to the commodity acquisition information is put in the basket 6. For example, if detecting that the commodity not input to the commodity acquisition information is put in the basket 6, the control unit 13 may output, to a display device provided in the store, information indicating that the commodity not input to the commodity acquisition information is put in the basket 6 and cause the display device to display the information. If detecting that the commodity not input to the commodity acquisition information is put in the basket 6, the control unit 13 may output, to an apparatus including a speaker that outputs sound, information indicating that the commodity not input to the commodity acquisition information is put in the basket 6 and cause the apparatus to output sound. If detecting that the commodity not input to the commodity acquisition information is put in the basket 6, the control unit 13 may transmit, to the portable terminal 3 carried by the store clerk, information indicating that the commodity not input to the commodity acquisition information is put in the basket 6 and cause the portable terminal 3 to screen-display the information.

In the above explanation, the commodity-data processing apparatus 2 is configured to permit a commodity to be put in the basket 6 for the predetermined time after the commodity has been registered to the commodity acquisition information. However, the commodity-data processing apparatus 2 is not limited to this configuration. The commodity-data processing apparatus 2 may be configured to determine whether a commodity is put in the basket 6 after being input to the commodity acquisition information and shift to the monitoring state again if the commodity is put in the basket 6. The commodity-data processing apparatus 2 may be configured to identify a commodity put in the basket 6 on the basis of an image acquired from the camera 16 and determine whether the identified commodity is a commodity input to the commodity acquisition information. In this case, if the commodity put in the basket 6 is not the commodity input to the commodity acquisition information, the commodity-data processing apparatus 2 transmits a warning to the store server 4.

In the above explanation, the store server 4 includes the user database in which the user identification information and the information for settlement are associated. However, the store server 4 is not limited to this configuration. The user database may be stored in a host device communicable with the store server 4. In this case, the store server 4 notifies the user identification information, a settlement amount, and the like to the host device to thereby cause the host device to execute settlement.

In the above explanation, the store server 4 is configured to transmit the screen for confirmation 51 to the portable terminal 3 carried by the store clerk. However, the store server 4 is not limited to this configuration. The store server 4 may be configured to transmit the screen for confirmation 51 to any apparatus if the apparatus is provided in the store and includes a display. The store server 4 may be configured to urge the store clerk to confirm the commodity by voice or the like rather than the screen display.

The control unit 42 of the store server 4 may be configured to periodically perform communication with the portable terminal 3 carried by the store clerk to thereby grasp a working state of the store clerk carrying the portable terminal 3 and then determine the portable terminal 3 to which the screen for confirmation 51 is transmitted. For example, the portable terminal 3 estimates, on the basis of detection results of an acceleration sensor and an angular velocity sensor, works performed by store clerks and determines whether the store clerks are capable of performing other work. The portable terminal 3 transmits information indicating whether the store clerks are capable of performing other work to the store server 4. The store server 4 determines on the basis of the received information whether the store clerk carrying the portable terminal 3 is capable of performing other work. The control unit 42 determines, as the portable terminal 3 to which the screen for confirmation 51 is transmitted, the portable terminal 3 close to the present position of the commodity-data processing apparatus 2 recognized in ACT 33 and carried by the store clerk determined as being capable of performing other work. Consequently, the control unit 42 can notify appropriate guidance to the store clerk capable of performing other work.

The embodiment is explained above. However, the embodiment is presented as an example and is not intended to limit the scope of the invention. This new embodiment can be implemented in other various forms. Various omissions, substitutions, and changes can be performed without departing from the scope of the invention. This embodiment and modifications of the embodiment are included in the scope and the gist of the invention and included in the inventions described in claims and the scope of equivalents of the inventions.

## Claims

1. A commodity-data processing apparatus comprising:
a first acquiring unit configured to acquire commodity identification information for identifying a commodity;
a second acquiring unit configured to acquire an image or a moving image including a container in a field of view of the image or moving image, the container for receiving the commodity; and
an output unit configured to, in response to the first acquiring unit having acquired the commodity identification information, input the commodity to a commodity acquisition information indicating a list of commodities to be purchased by the user and, in response to the first acquiring unit not having acquired the commodity identification to input to the commodity acquisition information and the second acquiring unit having determined the commodity has been placed in the container, output, on the basis of the image or the moving image including the container acquired by the second acquiring unit, information indicating that the commodity not input to the commodity acquisition information for checkout payment has been placed in the container.

2. The commodity-data processing apparatus according to claim 1, wherein, upon a determination that the commodity not input to the commodity acquisition information is put in the container, the output unit releases, until a predetermined time having elapsed after the commodity identification information is acquired, a monitoring state in which the output unit outputs a warning indicating that the commodity not input to the commodity acquisition information has been placed in the container.

3. The commodity-data processing apparatus according to claim 1 or 2, further comprising a communication interface operable to communicate with a store server and a portable terminal.

4. The commodity-data processing apparatus according to any one of claims 1 to 3, further comprising a control unit having a memory for storing the commodity acquisition information and a processor for processing the image or the moving image to determine whether an unregistered commodity has been placed in the container.

5. A commodity-data processing system comprising:
a commodity-data processing apparatus operated by a user of a store; and
a server apparatus, wherein
the commodity-data processing apparatus includes:
a first acquiring unit configured to acquire commodity identification information for identifying a commodity;
a second acquiring unit configured to acquire an image or a moving image including a container in a field of view of the image or the moving image in which a user puts the commodity; and
a first output unit configured to, if the commodity identification information is acquired by the first acquiring unit, input the commodity to commodity acquisition information indicating a list of commodities to be purchased by the user and, if a commodity not input to the commodity acquisition information is put in the container, output to the server apparatus, on the basis of the image or the moving image including the container acquired by the second acquiring unit, information indicating that the commodity not input to the commodity acquisition information is put in the container, and
the server apparatus includes a second output unit configured to, if receiving, from the commodity-data processing apparatus, the information indicating that the commodity not input to the commodity acquisition information is put in the container, output, to a portable terminal carried by a store clerk of the store, a screen for confirmation for urging the store clerk of the store to confirm the commodity.

6. The commodity-data processing system according to claim 5, wherein
the first output unit adds, to the information indicating that the commodity not input to the commodity acquisition information is put in the container, an image or a moving image of the container at a time when the commodity not input to the commodity acquisition information is put in the container and outputs the image or the moving image to the server apparatus, and
the second output unit causes the portable terminal to display, on the screen for confirmation, the image or the moving image of the container added to the information indicating that the commodity not input to the commodity acquisition information is put in the container.

7. The commodity-data processing system according to claim 5 or 6, wherein the second output unit estimates a present position of the commodity-data processing apparatus that transmits the information indicating that the commodity not input to the commodity acquisition information is put in the container and causes the portable terminal to display, on the screen for confirmation, a map of the store and the present position of the commodity-data processing apparatus.

8. A commodity-data processing method executed in an information processing device, the commodity-data processing method comprising:
acquiring commodity identification information of a commodity;
acquiring an image or a moving image including a container in a field of view of the image or the moving image, the container receiving the commodity placed by a user; and
upon a determination that the commodity identification information is acquired, inputting the commodity to commodity acquisition information indicating a list of commodities for checkout and payment, and
based on the acquired image or the moving image, upon a determination that a commodity not registered in the commodity acquisition information has been placed in the container, outputting information indicating that the commodity not input to the commodity acquisition information has been placed in the container.

9. The method according to claim 8, further comprising upon a determination that a commodity not registered in the commodity acquisition information has not been placed in the container, executing an accounting procedure.

10. The method according to claim 8 or 9, further comprising transmitting the commodity acquisition information to a store server.

11. The method according to any one of claims 8 to 10, wherein inputting the commodity to commodity acquisition information indicating a list of commodities for checkout and payment further comprises granting a permission to place the commodity in the container.

12. The method according to claim 11, wherein granting the permission to place the commodity in the container is limited by a predetermined time period.

13. The method according to claim 12, further comprising revoking the permission to place the commodity in the container when the predetermined time period has elapsed.

14. The method according to any one of claim 8 to 13, wherein outputting information indicating that the commodity not registered in the commodity acquisition information has been placed in the container comprises displaying a warning message on a screen.

15. A non-transitory computer readable medium storing a program causing a computer to execute the method according to any one of claims 8 to 14.
